# EUROPEAN PATENT SPECIFICATION

(11) **EP 2 410 197 B1**
(45) Date of publication and mention of the grant of the patent: **24.12.2014**
(21) Application number: 10170120.9
(22) Date of filing: 20.07.2010
(51) Int. Cl.: F16D 63/00, B60T 17/00

(54) **Brake system for an industrial gearbox**
Bremssystem für ein Industriegetriebe
Système de freinage pour boîte de vitesse industrielle

(43) Date of publication of application: 25.01.2012
(73) Proprietor: Hansen Industrial Transmissions, 2650 Edegem (BE)
(72) Inventor: De Munck, Thierry, 2610, Wilrijk (BE); Celik, Mehmet, 4822 RT, Breda (NL); Goos, Eric, 2550, Kontich (BE)
(74) Representative: Hertoghe, Kris Angèle Louisa

(56) References cited:
- EP-A1- 1 514 758
- EP-A1- 2 112 396
- US-B2- 6 551 027

## Description

### Technical field of the invention

The present invention relates to a brake system for an industrial gearbox and to an industrial gearbox and brake system assembly comprising such a brake system.

### Background of the invention

Brake systems for gearboxes are widely known, especially in automotive. However, requirements for brake systems for gearboxes in automotive are quite different from requirements for gearboxes for industrial applications, such as, for example, cooling towers. Gear systems for use in gearboxes for such industrial applications are required for slowing them down and stop them from turning and to, after being stopped, hold the gear unit. This may, for example, be required for being able to safely perform maintenance activities.

Different types of brake systems for use with industrial gearboxes are already available. Examples of such brake systems are disc brakes and drum brakes. However, known brake systems may have a number of disadvantages.

A big disadvantage is that the interface for attaching these brake systems to the gearbox differs depending on the size and kind of gearbox and on the specifications per supplier.

Furthermore, known brake systems are to be provided to the gearbox during manufacturing of the gearbox. Hence, the brake systems are fixed to the gearbox and can, after installation, not being removed anymore without dismounting other parts of the gearbox. Thus, every gearbox needs to be provided with its own brake system, which increases the total costs for the gearbox.

Another disadvantage is that known brake systems for industrial gearboxes are relatively large by which they can obstruct good functioning of other parts of the gearbox.

Different types of brake systems may exist, i.e. mechanical brake systems and hydraulic brake systems. Mechanical brake systems are not suitable for being used when high brake power is required. In that case, hydraulic brake systems have to be used. However, known hydraulic brake systems for providing high brake power are very expensive and thus significantly increase the total cost of the industrial gearbox.

A specific example of a known brake system may be a brake system of a cooling tower. During maintenance activities, people have to work inside the tower. Therefore, the gear units of such cooling towers are mostly equipped with a backstop so that in one direction there is no rotation of the big fan possible. However, due to the wind milling effect the fan can rotate slowly in the other direction. Therefore, the fan has to be stopped and blocked to insure a safe working because otherwise, people are in danger. Today dangerous situations may occur because of the lack of proper regulations and because of the non-existence of suitable brake systems for being used in such cases. Therefore, there is a demand for brake systems to stop rotation of the fan and to fix it in its position during maintenance activities. More particularly, there is a demand for brake systems to be safely, easy and cost-effective use in gearboxes in general.

US6551027 describes a pipe handling clamp for use on a deep water pipe laying vessel and substantially disclosing the features of the preamble of claim 1. The arrangement is suitable for applying radial compressive force on a pipe or other cylindrical member.

### Summary of the invention

It is an object of embodiments of the present invention to provide a brake system for an industrial gearbox according to claim 1 and an industrial gearbox and brake system assembly comprising such a brake system, according to claim 4.

A brake system according to embodiments of the invention may be at least partly movable, which means that such brake systems are not, or only partly, have to be provided on the gearbox during manufacturing, which significantly decreases the total cost of the gearbox. A brake system according to embodiments of the invention may be at least partly provided to customers separately from the gearbox and such brake system can be used for more than one gearbox. replacement activities are required, the brake system can easily be connected to a lantern of the gearbox and can, when such maintenance or component replacement activities are finished, easily be removed from the lantern.

According to embodiments of the invention, the brake system may be a mobile brake system, which means that the hydraulic brake cylinders may be adapted for removably and repeatedly being connected to a lantern of the industrial gearbox and the brake lines and the device for causing movement of the hydraulic brake cylinders may be adapted for being removably connected to the hydraulic brake cylinders.

An advantage hereof is that a brake system according to embodiments of the invention can be used for more than one gearbox, which significantly reduces the total cost of the gearboxes. When maintenance or component replacement activities are to be performed, the hydraulic brake cylinders may be connected to the lantern of the gearbox and the brake lines with attached or connected thereto the device for causing movement of the hydraulic brake cylinders may be connected to the hydraulic brake cylinders. After such maintenance or component replacement activities the complete brake system may be easily removed from the lantern of the gearbox.

According to other embodiments of the invention, the brake system may be a stationary brake system, which means that the hydraulic brake cylinders may be adapted for being permanently connected to a lantern of the industrial gearbox and the brake lines and the device for causing movement of the hydraulic brake cylinders may be adapted for being removably connected to the hydraulic brake cylinders. When maintenance or component replacement activities are to be performed, the brake lines with attached or connected thereto the device for causing movement of the hydraulic brake cylinders may be connected to the hydraulic brake cylinders. After such maintenance or component replacement activities, the brake lines with attached or connected thereto the device for causing movement of the hydraulic brake cylinders may be easily removed from the hydraulic brake cylinders.

In these embodiments, the hydraulic brake cylinders are permanently mounted on the lantern of the gearbox and the brake lines and the device for causing movement of the hydraulic brake cylinders may be used for more than one gearbox. Although less cost saving than the previous embodiment, a brake system according to these embodiments still leads to cheaper gearboxes than prior art gearboxes with brake systems.

According to one aspect, the present invention provides a brake system for an industrial gearbox according to claim 1.

The brake system may furthermore comprise brake line coupling elements for connecting the brake lines to the hydraulic brake cylinders.

According to further embodiments, the brake system may furthermore comprise a control switch at each of the hydraulic cylinders for controlling the position of the brake shoes.

According to embodiments of the invention, the device for causing movement of the hydraulic brake cylinders may be any device known by a person skilled in the art which is suitable for causing such movement. According to specific embodiments of the invention, the device for causing movement of the hydraulic brake cylinders may be a pump.

In a further aspect, the present invention provides an industrial gearbox and brake system assembly according to claim 4.

The hydraulic brake cylinders may be removably connected to the lantern and the brake lines and the device for causing movement of the hydraulic brake cylinders may be removably connected to the hydraulic brake cylinders.

An advantage hereof is that a brake system according to embodiments of the invention can be used for more than one gearbox, which significantly reduces the total cost of the gearboxes.

According to other embodiments, the brake system may be a stationary brake system, which means that the hydraulic brake cylinders may be permanently connected to the lantern and the brake lines and the device for causing movement of the hydraulic brake cylinders may be removably connected to the hydraulic brake cylinders.

According to these embodiments, the hydraulic brake cylinders are fixedly and permanently mounted on the lantern of the gearbox and the brake lines and the device for causing movement of the hydraulic brake cylinders may be used for more than one gearbox. Although less cost saving than the previous embodiment, a brake system according to these embodiments still leads to cheaper gearboxes than prior art gearboxes with brake systems.

In a gearbox according to embodiments of the invention, the brake lines may be connected to the hydraulic brake cylinders by means of brake line coupling elements. The brake system may furthermore comprise a control switch at each of the hydraulic brake cylinders for controlling the position of the brake shoe.

According to embodiments of the invention, the device for causing movement of the hydraulic brake cylinders may be any device known by a person skilled in the art which is suitable for causing such movement. According to specific embodiments of the invention, the device for causing movement of the hydraulic brake cylinders may be a pump.

The lantern of a gearbox according to embodiments of the present invention may comprise a coupling for transferring torque of a shaft of the driving motor to an input shaft of the gearbox and, according to embodiments of the invention, the brake system may be mounted on the lantern such that the brake shoes of the hydraulic brake cylinders are axially aligned with each other and with a flange of the coupling as considered in a direction along the longitudinal axis of the hydraulic brake cylinders.

### Brief description of the drawings

It has to be noted that same reference signs in the different figures refer to same, similar or analogous elements.
Fig. 1 and Fig. 2 schematically illustrate a brake system according to embodiments of the invention.
Fig. 3 illustrates a brake system according to embodiments of the present invention which is mounted on a lantern of an industrial gearbox.
Fig. 4 and Fig. 5 show different implementations of an industrial gearbox and brake system assembly according to embodiments of the present invention.

### Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also includes indirect contact between part A and part B, in other words also includes the case where intermediate parts are present in between part A and part B. Not all embodiments of the invention comprise all features of the invention. In the following description and claims, any of the claimed embodiments can be used in any combination.

The present invention will be described by means of different embodiments. It has to be understood that these embodiments are only for the ease of understanding the invention and are not intended to limit the invention in any way.

The present invention provides a brake system for an industrial gearbox and an industrial gearbox and brake system assembly comprising such a brake system.

In a first aspect, the present invention provides a brake system for an industrial gearbox, the brake system comprising two hydraulic brake cylinders, each hydraulic brake cylinder comprising a brake shoe. The brake system furthermore comprises a device for causing movement of the hydraulic brake cylinders and brake lines for connecting each of the hydraulic brake cylinders to the device for causing movement of the hydraulic brake cylinders.

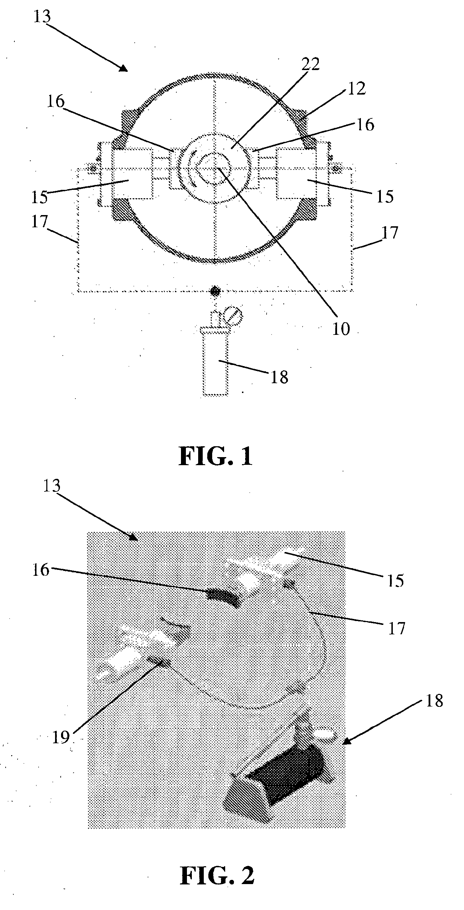

Fig. 1 illustrates a cross section of a brake system 13 according to embodiments of the present invention mounted on an industrial gearbox. The industrial gearbox comprises an input shaft 10 which is to be connected to a driving motor (not shown) via a lantern 12. The brake system 13 is connected to the lantern 12. The brake system 13 comprises two hydraulic brake cylinders 15. Each of the hydraulic brake cylinders 15 comprises a brake shoe 16. The brake system 13 furthermore comprises brake lines 17, which may also be referred to as brake pipes, for connecting each of the two hydraulic brake cylinders 15 to a device 18 for causing movement of the hydraulic brake cylinders 15. This is also illustrated in Fig. 2, which illustrates a brake system 13 according to embodiments of the invention. According to embodiments of the invention, the device 18 for causing movement of the hydraulic brake cylinders 15 may be any device known by a person skilled in the art which is suitable for causing movement of the hydraulic brake cylinders 15. According to specific embodiments of the invention, the device 18 for causing movement of the hydraulic brake cylinders 15 may be a pump 18. The brake lines 17 may be connected to the hydraulic brake cylinders 15 by brake line coupling elements 19.

According to embodiments of the invention, the brake system 13 may be a mobile brake system, which means that the hydraulic brake cylinders 15 may be adapted for removably and repeatedly being connected to the lantern 12 of the industrial gearbox 20 and the brake lines 17 and the device 18 for causing movement of the hydraulic brake cylinders 15 may be adapted for being removably connected to the hydraulic brake cylinders 15.

An advantage hereof is that a brake system 13 according to embodiments of the invention can be used for more than one gearbox 20, which significantly reduces the total cost of the industrial gearboxes 13. When maintenance or component replacement activities are to be performed, the hydraulic brake cylinders 15 may be connected to the lantern 12 of the industrial gearbox 20 and the brake lines 17 and the device 18 for causing movement of the hydraulic brake cylinders 15 may be connected to the hydraulic brake cylinders 15. After such maintenance or component replacement activities the complete brake system 13 may be easily removed from the lantern 12 of the industrial gearbox 20.

According to other embodiments of the invention, the brake system 13 may be a stationary brake system, which means that the hydraulic brake cylinders 15 may be adapted for being permanently connected to a lantern 12 of the industrial gearbox 20 and the brake lines 17 and the device 18 for causing movement of the hydraulic brake cylinders 15 may be adapted for being removably connected to the hydraulic brake cylinders 15. When maintenance or component replacement activities are to be performed, the brake lines 17 with attached or connected thereto the device 18 for causing movement of the hydraulic brake cylinders 15 may be connected to the hydraulic brake cylinders 15. After such maintenance or component replacement activities, the brake lines 17 with attached or connected thereto the device 18 for causing movement of the hydraulic brake cylinders 15 may be easily removed from the hydraulic brake cylinders 15.

In these embodiments, the hydraulic brake cylinders 15 may be permanently mounted on the lantern of the industrial gearbox 20 and the brake lines 17 and the device 18 for causing movement of the hydraulic brake cylinders 15 may be used for more than one gearbox 20. Although less cost saving than the previous embodiment, a brake system 13 according to these embodiments still leads to cheaper industrial gearboxes 13 than prior art gearboxes with brake systems.

Optionally the brake system 13 may furthermore comprise a control switch at each of the hydraulic cylinders 15 for controlling the position of the brake shoes 16. Controlling the position of the brake shoes 16 may, next to other safety measures, be important to prevent the industrial gearbox 20 from being switched on for as long as the hydraulic brake cylinders 15 are in a brake position.

In a second aspect, the present invention also provides an industrial gearbox and brake system assembly. The industrial gearbox comprises a lantern 12 for connecting the industrial gearbox 20 with a driving motor 11, and a brake system 13. The brake system 13 comprises two hydraulic brake cylinders 15 provided at opposite sides of the lantern 12, each hydraulic brake cylinder 15 comprising a brake shoe 16. The brake system 13 furthermore comprises a device 18 for causing movement of the hydraulic brake cylinders 15 and brake lines 17 for connecting each of the hydraulic cylinders 15 to the device 18 for causing movement of the hydraulic brake cylinders 15.

According to embodiments of the invention, the device 18 for causing movement of the hydraulic brake cylinders 15 may be any device known by a person skilled in the art which is suitable for causing movement of the hydraulic brake cylinders 15. According to specific embodiments of the invention, the device 18 for causing movement of the hydraulic brake cylinders 15 may be a pump 18.

For the ease of explanation, in the description hereinafter embodiments of the invention will further be described by means of the device 18 for causing movement of the hydraulic brake cylinders 15 being a pump. It has to be understood that this is not intended to limit the invention in any way.

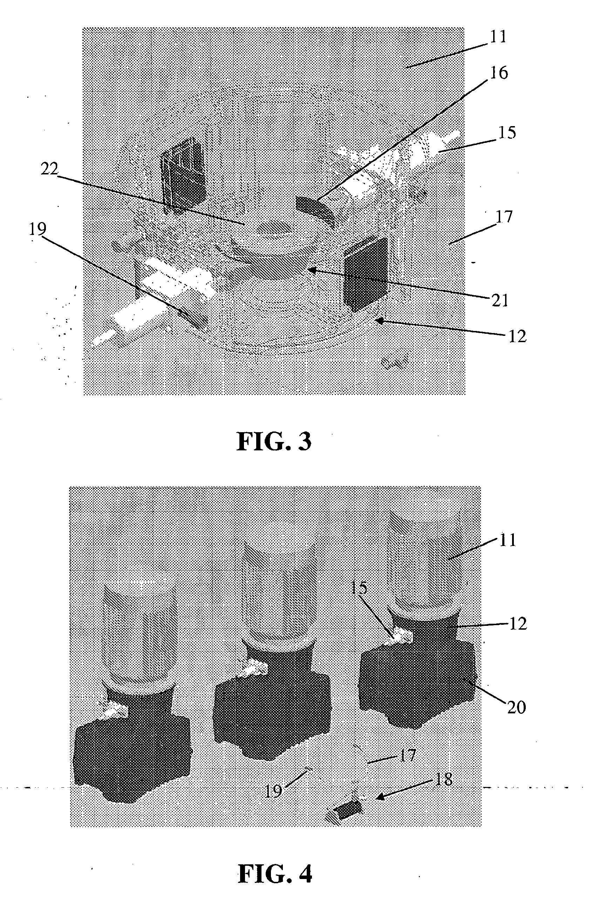

As can be seen from Fig. 3, the brake system 13 is mounted on the lantern 12 of the industrial gearbox (not shown). Inside the lantern 12 a coupling 21 is present for transferring torque of a motor shaft to an input shaft 10 of the industrial gearbox 20. The coupling 21 as shown in Fig. 3 is only one half of a coupling, the other half is provided on the motor 11. For the ease of explanation, in the further description and claims, when coupling 21 is mentioned, this is intended to indicate that half of the coupling which is present in the lantern 12.

The brake system 13 is mounted on the lantern 12 such that the brake shoes 16 of the hydraulic brake cylinders 15 are axially aligned with each other and with a flange 22 of the coupling 21 as considered in a direction along the longitudinal axis of the hydraulic brake cylinders 15. When mounted on the lantern 12, the brake line coupling elements 19 provided on the hydraulic brake cylinders 15 are located outside the lantern 12, such that the brake lines 17 can easily be connected to the hydraulic brake cylinders 15.

Optionally the brake system 13 may furthermore comprise a control switch at each of the hydraulic cylinders 15 for controlling the position of the brake shoes 16. Controlling the position of the brake shoes 16 may, next to other safety measures, be important to prevent the industrial gearbox 20 from being switched on for as long as the hydraulic brake cylinders 15 are in a brake position, in other words for as long as the brake shoes 16 of the hydraulic brake cylinders 15 are in contact with flange 22 of the coupling 21 in the lantern 12.

According to embodiments of the invention, the brake system 13 may be a stationary brake system. With stationary brake system is meant that the hydraulic brake cylinders 15 may be permanently connected to the lantern 12 and the pump 18 and brake lines 17 may then be connected to the hydraulic brake cylinders 15 when required, for example for maintenance or component replacement activities (see Fig. 4). In such cases, the hydraulic brake cylinders 15 may be adapted for permanently being fixed to the lantern 12 of the gearbox 20. With permanently connected is meant that the hydraulic brake cylinders 15 are intended to stay connected to the lantern 12 of the gearbox 20 at any time. Connecting the hydraulic brake cylinders 15 to the lantern 12 may, for example, be done by means of bolts. According to these embodiments, the two hydraulic brake cylinders 15 are mounted at opposite sides of the lantern 12 of the gearbox 20 and the gearbox 20 is delivered to customers as such. The brake lines 17 with the brake line coupling elements 19 and the pump 18 can then separately be delivered. This may be done in any suitable configuration. For example, the brake lines 17 with attached or connected thereto the pump 18 at one side and the brake line coupling elements 19 at another side can separately be delivered or the brake lines with attached thereto the brake line coupling elements 19 can be delivered separately from the pump 18. When maintenance or component replacement activities are to be performed, the brake lines 17 with connected thereto the pump 18 and the brake line coupling elements 19 may be connected to the hydraulic brake cylinders 15 which are fixed on the lantern 12 of the gearbox 20. Depending on the number of gearboxes 20 present on a site, the customer can chose how many pumps 18 are required. The brake line coupling elements 19 at one end of the brake lines 17 are in these cases adapted to be removably connected to the hydraulic brake cylinders 15 and can easily be removed and transferred to other gearboxes 20. With removably connected is meant that the brake lines 17 and the pump 18 are attached or connected to the hydraulic brake cylinders 15 in such a way that they can easily be removed after performing maintenance or component replacement activities.

An advantage of these embodiments is that cost can be partly reduced as the number of pumps 18 in combination with brake lines 17 and brake line coupling elements 19 can be lowered with respect to the case where a brake system 13 has to be provided on every gearbox 20, as is the case for prior art brake systems.

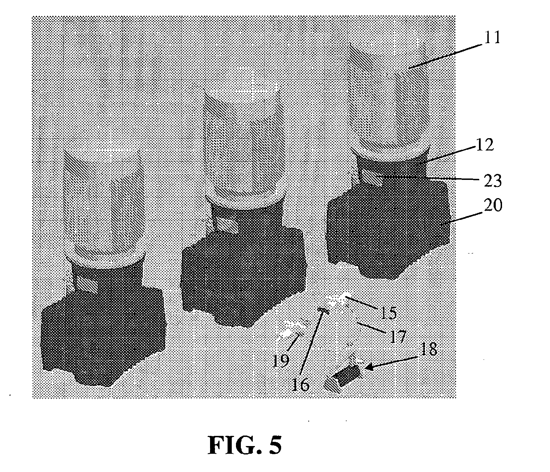

According to other embodiments of the invention, the brake system 13 may be a mobile brake system (see Fig. 5). In that case, the complete brake system 13 may be intended for being connected to the lantern 12 of the gearbox 20 only when maintenance or component replacement activities have to be performed. In such cases, the hydraulic brake cylinders 15 are adapted for removably and repeatedly being connected to the lantern 12 of the gearbox 20. With removably connected is meant that the hydraulic brake cylinders 15 are attached or connected to the lantern 12 of the gearbox 20 in such a way that they can easily be removed after performing maintenance or component replacement activities. The brake lines 17 with attached or connected thereto the pump 18 may be connected to the hydraulic brake cylinders 15 in such a way that they can, at any time, easily be removed from the hydraulic brake cylinders 15.

According to these embodiments, the complete brake system 13 may be delivered to customers separately from the gearbox 20. The gearbox 20 may in such cases, for example be delivered to the customer with a cover 23 on the interface. With interface is meant the location on the lantern 12 where the brake system 13 has to be mounted. Depending on the number of gearboxes 20 present on a site, the customer can chose how many pumps 18 are required. As according to these embodiments, no hydraulic brake cylinders 15 are to be provided on the gearbox 20, the total cost can even be more reduces with respect to the previous embodiment.

Both in case of a mobile and a stationary brake system 13 according to embodiments of the invention, the brake shoes 16 are permanently provided in the lantern 12 of the industrial gearbox 20.

An advantage of a brake system 13 according to embodiments of the invention and a gearbox 20 comprising such a brake system 13 is that, when maintenance or component replacement activities are required, at least part of the brake system 13 can easily be connected to the lantern 12 of the gearbox 20 and can, when maintenance or component replacement activities are finished, easily and at least partly be removed from the lantern 12.

Hereinafter, the working principle of a brake system 13 according to embodiments of the invention will be described. Before using the brake system 13, the necessary caution has to be taken into account. First, measures have to be taken to, in any case, prevent start up of the driving motor 11 when maintenance or component replacement activities are being done. When the hydraulic brake cylinders 15 are in place, the device 18 for causing movement of the hydraulic brake cylinders 15 has to be connected to the hydraulic brake cylinders 15 by means of the brake lines 17 and the brake line coupling elements 19. In case of a stationary brake system 13, no action has to be taken to bring the hydraulic brake cylinders 15 in place, because they are permanently provided on the lantern 12 of the gearbox 20. In case of a mobile brake system 13, action has to be taken to first connect the hydraulic brake cylinders 15 to the lantern 12 of the gearbox 20.

The device 18 for causing movement of the hydraulic brake cylinders 15 provides forces to both the hydraulic brake cylinders 15 in a symmetrical way. For example, in case the device 18 for causing movement of the hydraulic brake cylinders 15 is a pump, the pump 18 provides oil to the hydraulic brake cylinders 15. As a consequence, the oil pressure increases proportional in both hydraulic brake cylinders 15. Because of the increasing oil pressure, the hydraulic brake cylinders 15 and thus also the brake shoes 16 will move in a direction of the coupling 21. Eventually, the brake shoes 16 will touch the coupling 21, and more particularly the flange 22 of the coupling 21 at opposite sides. The brake shoes 16 are self-aligning, thereby providing a uniform load to the flange 22 of the coupling 21. The oil pressure will further increase to a pre-determined value. From the moment the pre-determined value of oil pressure is achieved, the gearbox 20 will no longer be able to freely rotate and thus stops rotating. An advantage of the brake system 13 according to embodiments of the invention is that the pressure is uniformly provided at both sides of the flange 22 through which no radial load is exerted to shaft ends of the motor 11 and/or the gearbox 20. A too high radial load on shaft ends may have a negative influence on parts of the motor 11 and/or industrial gearbox 13, such as for example bearings.

Furthermore, braking power is exerted only on one half of the coupling 21, i.e. the coupling 21 in the lantern 12, through which, during maintenance or component replacement activities, the motor 11 can be removed, in that way reducing risks for the persons performing maintenance activities.

The hydraulic brake cylinders 15 can be mechanically blocked in their brake position and the pressure can then be relieved from the cylinders 15. Because of that, the brake system 13 works pressure-less during maintenance or component replacement activities and is thus insensitive for failure because of pressure loss.

## Claims

1. A brake system (13) for an industrial gearbox (20), the brake system (13) comprising:
- two hydraulic brake cylinders (15), each hydraulic brake cylinder (15) comprising a brake shoe (16),
- a device (18) for causing movement of the hydraulic brake cylinders (15), and
- brake lines (17) for connecting each of the hydraulic brake cylinders (15) to such device (18),
**characterised in that** the brake cylinders (15) are adapted for being removably and repeatedly connected to a lantern (12) of the industrial gearbox (20) and/or in that the brake lines (17) with connected thereto the device (18) for causing movement of the brake cylinders (15) are adapted for being removably and repeatedly connected to the brake cylinders (15).

2. A brake system (13) according to claim 1, furthermore comprising brake line coupling elements (19) for connecting the brake lines (17) to the hydraulic brake cylinders (15).

3. A brake system (13) according to any of he previous claims, furthermore comprising a control switch at each of the hydraulic cylinders (15) for controlling the position of the brake shoes (16).

4. An industrial gearbox (20) and brake system (15) assembly, the industrial gearbox (20) comprising a lantern (12) for connecting the gearbox (20) to a driving motor (11), and the brake system (13) comprising:
- two hydraulic brake cylinders (15) provided at opposite sides of the lantern (12), each hydraulic brake cylinder (15) comprising a brake shoe (16),
- a device (18) for causing movement of the hydraulic brake cylinders (15), and
- brake lines (17) for connecting each of the hydraulic cylinders (15) to such device (18).
**characterised in that** the brake cylinders (15) are removably connected to a lantern (12) of the industrial gearbox (20) and/or **in that** the brake lines (17) with connected thereto the device (18) for causing movement of the hydraulic brake cylinders (15) are removably connected to hydraulic brake cylinders (15) of the industrial gearbox (20)

5. An industrial gearbox (20) and brake system (15) assembly according to claim 4, wherein the brake lines (17) are connected to the hydraulic brake cylinders (15) by means of brake line coupling elements (19).

6. An industrial gearbox (20) and brake system (15) assembly according to any of claims 4 or 5, wherein the brake system (13) furthermore comprises a control switch at each of the hydraulic brake cylinders (15) for controlling the position of the brake shoe (16).

7. An industrial gearbox (20) and brake system (15) assembly according to any of claims 4 to 6, the lantern (12) comprising a coupling (21) for transferring torque of a shaft of the driving motor (11) to an input shaft (10) of the gearbox (20), wherein the brake system (13) is mounted on the lantern (12) such that the brake shoes (16) of the hydraulic brake cylinders (15) are axially aligned with each other and with a flange (22) of the coupling (21) as considered in a direction along the longitudinal axis of the hydraulic brake cylinders (15).

## Patentansprüche

1. Bremssystem (13) für ein Industriegetriebe (20), wobei das Bremssystem (13) Folgendes umfasst:
- zwei Hydraulikbremszylinder (15), wobei jeder Hydraulikbremszylinder (15) einen Bremsschuh (16) umfasst,
- eine Vorrichtung (18), um eine Bewegung des Hydraulikbremszylinders (15) zu verursachen, und
- Bremsleitungen (17) zum Verbinden jedes der Hydraulikbremszylinder (15) mit einer derartigen Vorrichtung (18),
**dadurch gekennzeichnet, dass** die Bremszylinder (15) dazu ausgelegt sind, lösbar und wiederholt mit einem Triebstock (12) des Industriegetriebes (20) verbunden zu werden und/oder dass die Bremsleitungen (17) mit der daran angeschlossenen Vorrichtung (18) zum Verursachen einer Bewegung der Bremszylinder (15) dazu ausgelegt sind, lösbar und wiederholt mit den Bremszylindern (15) verbunden zu werden.

2. Bremssystem (13) nach Anspruch 1, das ferner Bremsleitungskopplungselemente (19) zum Verbinden der Bremsleitung (17) mit den Hydraulikbremszylindern (15) umfasst.

3. Bremssystem (13) nach einem der vorhergehenden Ansprüche, das ferner an jedem der Hydraulikzylinder (15) einen Steuerschalter zum Steuern der Position der Bremsschuhe (16) umfasst.

4. Industriegetriebe (20) und Anordnung für ein Bremssystem (15), wobei das Industriegetriebe (20) eine Laterne (12) zum Verbinden des Getriebes (20) mit einem Antriebsmotor (11) umfasst und das Bremssystem (13) Folgendes umfasst:
- zwei Hydraulikbremszylinder (15), die an gegenüberliegenden Seiten der Laterne (12) vorgesehen sind, wobei jeder Hydraulikbremszylinder (15) einen Bremsschuh (16) umfasst,
- eine Vorrichtung (18), um eine Bewegung des Hydraulikbremszylinders (15) zu verursachen, und
- Bremsleitungen (17) zum Verbinden jedes der Hydraulikbremszylinder (15) mit einer derartigen Vorrichtung (18),
**dadurch gekennzeichnet, dass** die Bremszylinder (15) lösbar mit einer Laterne (12) des Industriegetriebes (20) verbunden sind und/oder dass die Bremsleitungen (17) mit der daran angeschlossenen Vorrichtung (18) zum Verursachen einer Bewegung der Hydraulikbremszylinder (15) lösbar mit den Hydraulikbremszylindern (15) des Industriegetriebes (20) verbunden sind.

5. Industriegetriebe (20) und Anordnung für ein Bremssystem (15) nach Anspruch 4, wobei die Bremsleitungen (17) mit den Hydraulikbremszylindern (15) mittels der Bremsleitungskopplungselemente (19) verbunden sind.

6. Industriegetriebe (20) und Anordnung für ein Bremssystem (15) nach einem der Ansprüche 4 oder 5, wobei das Bremssystem (13) ferner an jedem der Hydraulikbremszylinder (15) einen Steuerschalter zum Steuern der Position des Bremsschuhs (16) umfasst.

7. Industriegetriebe (20) und Anordnung für ein Bremssystem (15) nach einem der Ansprüche 4 bis 6, wobei die Laterne (12) eine Kupplung (21) zum Übertragen von Drehmoment einer Welle des Antriebsmotors (11) an eine Eingangswelle (10) des Getriebes (20) umfasst, wobei das Bremssystem (13) derart an dem Triebstock (12) montiert ist, dass die Bremsschuhe (16) der Hydraulikbremszylinder (15) in einer Richtung entlang der Längsachse des Hydraulikbremszylinders (15) betrachtet axial miteinander und mit einem Flansch (22) der Kupplung (21) ausgerichtet sind.

## Revendications

1. Un système de freinage (13) pour un réducteur industriel (20), le système de freinage (13) comprenant :
- deux cylindres de frein hydrauliques (15), chaque cylindre de frein hydraulique (15) comprenant un patin de frein (16),
- un dispositif (18) destiné à provoquer un déplacement des cylindres de frein hydrauliques (15), et
- des conduites de frein (17) destinées au raccordement de chacun des cylindres de frein hydrauliques (15) audit dispositif (18),
**caractérisé en ce que** les cylindres de frein (15) sont adaptés de façon à être raccordés de manière amovible et répétée à un fuseau (12) du réducteur industriel (20) et/ou **en ce que** les conduites de frein (17) avec le dispositif raccordé à celles-ci (18) de façon à provoquer un déplacement des cylindres de frein (15) sont adaptées de façon à être raccordées de manière amovible et répétée aux cylindres de frein (15).

2. Un système de freinage (13) selon la Revendication 1, comprenant en outre des éléments de couplage de conduite de frein (19) destinés au raccordement des conduites de frein (17) aux cylindres de frein hydrauliques (15).

3. Un système de freinage (13) selon l'une quelconque des Revendications précédentes, comprenant en outre un commutateur de commande au niveau de chacun des cylindres hydrauliques (15) destiné à commander la position des patins de frein (16).

4. Un ensemble réducteur industriel (20) et système de freinage (15), le réducteur industriel (20) comprenant un fuseau (12) destiné au raccordement du réducteur (20) à un moteur d'entraînement (11) et le système de freinage (13) comprenant :
- deux cylindres de frein hydrauliques (15) placés à des côtés opposés du fuseau (12), chaque cylindre de frein hydraulique (15) comprenant un patin de frein (16),
- un dispositif (18) destiné à provoquer un déplacement des cylindres de frein hydrauliques (15), et
- des conduites de frein (17) destinées au raccordement de chacun des cylindres hydrauliques (15) audit dispositif (18),
**caractérisé en ce que** les cylindres de frein (15) sont raccordés de manière amovible à un fuseau (12) du réducteur industriel (20) et/ou **en ce que** les conduites de frein (17) avec le dispositif raccordé à celles-ci (18) de façon à provoquer un déplacement des cylindres de frein hydrauliques (15) sont raccordées de manière amovible aux cylindres de frein hydrauliques (15) du réducteur industriel (20)

5. Un ensemble réducteur industriel (20) et système de freinage (15) selon la Revendication 4, où les conduites de frein (17) sont raccordées aux cylindres de frein hydrauliques (15) au moyen d'éléments de couplage de conduite de frein (19).

6. Un ensemble réducteur industriel (20) et système de freinage (15) selon l'une quelconque des Revendications 4 ou 5, où le système de freinage (13) comprend en outre un commutateur de commande au niveau de chacun des cylindres de frein hydrauliques (15) destiné à commander la position du patin de frein (16).

7. Un ensemble réducteur industriel (20) et système de freinage (15) selon l'une quelconque des Revendications 4 à 6, le fuseau (12) comprenant un couplage (21) destiné au transfert d'un couple d'un arbre du moteur d'entraînement (11) à un arbre d'entrée (10) du réducteur (20), où le système de freinage (13) est monté sur le fuseau (12) de sorte que les patins de frein (16) des cylindres de frein hydrauliques (15) soient axialement alignés les uns avec les autres et avec une bride (22) du couplage (21) considérés dans une direction le long de l'axe longitudinal des cylindres de frein hydrauliques (15).
